# EUROPÄISCHE PATENTANMELDUNG

(11) **EP 0 803 965 A2**
(43) Veröffentlichungstag der Anmeldung: **29.10.1997**
(21) Anmeldenummer: 97105507.4
(22) Anmeldetag: 03.04.1997
(51) Int. Cl.: H02M 3/07

(54) **Schaltungsanordnung zur Spannungsüberhöhung**

(30) Priorität: 23.04.1996 DE 19616114
(71) Anmelder: TEMIC TELEFUNKEN microelectronic GmbH, 74072 Heilbronn (DE)
(72) Erfinder: Hartmann, Andreas, 85609 Aschheim (DE)
(74) Vertreter: Maute, Hans-Jürgen, Dipl.-Ing.

(57) **Zusammenfassung**

Beschrieben wird eine Schaltungsanordnung zur Spannungsüberhöhung mit einem Aufwärtswandler, mit einer deaktivierbaren Oszillatoranordnung und mit einer Rückkopplungsschleife. Hierbei weist der Aufwärtswandler einen Wandlereingang, an dem eine durch die Oszillatoranordnung erzeugte Oszillatorspannung anliegt, und einen Wandlerausgang, an dem eine gleichgerichtete, bezüglich der Oszillatorspannung überhöhte Ausgangsspannung ansteht, auf. Der Wandlerausgang ist über die Rückkopplungsschleife mit einem Deaktivierungseingang, über den die Oszillatoranordnung deaktivierbar ist, verbunden. Die Ausgangsspannung wird bei einen Schwellwert überschreitenden Spannungswerten über die Rückkopplungsschleife durch Deaktivierung der Oszillatoranordnung begrenzt.

## Beschreibung

Die Erfindung betrifft eine Schaltungsanordnung gemäß dem Oberbegriff des Patentanspruchs 1.

Eine derartige Schaltungsanordnung ist aus der Literaturstelle Beuth/Schmusch: 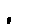 Elektronik 3, Grundschaltungen", 9. Auflage, Vogel Buchverlag, Würzburg, 1988, Seite 54 - 55, bekannt. Die dort beschriebene Schaltungsanordnung weist einen Aufwärtswandler mit zwei Dioden und zwei Kondensatoren auf, die jeweils eine der Halbwellen einer Oszillatorspannung gleichrichten. Die Kondensatoren sind so zusammengeschaltet, daß die an ihnen anliegenden Spannungen zu einer Ausgangsspannung addiert werden, welche bei unbelastetem Aufwärtswandler gleich der doppelten Amplitude der Oszillatorspannung ist.

Diese bekannte Schaltungsanordnung weist den Nachteil auf, daß die Ausgangsspannung bei einem Anstieg der Oszillatorspannung auf Spannungswerte ansteigt, die für dem Aufwärtswandler nachgeschaltete Schaltungsteile zu hoch sind.

Der Erfindung liegt daher die Aufgabe zugrunde, eine Schaltungsanordnung gemäß dem Oberbegriffe des Patentanspruchs 1 anzugeben, mit der Ausgangsspannung erzeugt werden, die einen maximalen Spannungswert nicht überschreiten.

Die Aufgabe wird durch die kennzeichnenden Merkmale des Patentanspruchs 1 gelöst. Vorteilhafte Ausgestaltungen und Weiterbildungen ergeben sich aus den weiteren Ansprüchen.

Die Ausgangsspannung wird erfindungsgemäß dadurch begrenzt, daß eine Oszillatoranordnung, welche die Oszillatorspannung erzeugt, bei einen Schwellwert überschreitenden Spannungswerten der Ausgangsspannung deaktiviert, d. h. gestoppt, wird. Eine auf diese Art durchgeführte Begrenzung ist vorteilhaft, da zur Deaktivierung der Oszillatoranordnung lediglich ein geringer, den Aufwärtswandler kaum belastender, Signalstrom erforderlich ist und da die Verlustleistung der Schaltungsanordnung demzufolge gering ist.

Die Schaltungsanordnung weist vorzugsweise einen Begrenzungsschalter als Rückkopplungsschleife auf, über den der Wandlerausgang mit einem Deaktivierungseingang der Oszillatoranordnung verbunden ist. Der Begrenzungsschalter wird dabei derart geschaltet, daß er bei Spannungswerten der Ausgangsspannung, die größer als der Schwellwert sind, geschlossen, d. h. leitend, ist. Er ist vorteilhafterweise als Zener-Diode ausgebildet, da diese durch die Ausgangsspannung auf einfache Weise ansteuerbar ist.

Als besonders vorteilhaft erweist es sich, die Oszillatoranordnung als Oszillatorstufe mit einer nachgeschalteten komplementären Emitterfolgerstufe auszubilden, über die ein Oszillatorausgang der Oszillatorstufe mit dem Wandlereingang des Aufwärtswandlers verbunden ist. Die komplementäre Emitterfolgerstufe ist dabei zur Spannungsversorgung mit zwei Versorgungsanschlüssen, an denen eine Betriebsspannung anliegt, verbunden.

In einer vorteilhaften Weiterbildung der Erfindung ist der, vorzugsweise als Open-Collector-Ausgang ausgebildete, Oszillatorausgang der Oszillatorstufe mit dem Wandlerausgang verbunden. Diese Verbindung bewirkt bei gleich bleibender Betriebsspannung eine Zunahme des Signalhubs am Oszillatorausgang und eine Zunahme der Amplitude der Oszillatorspannung, so daß das Verhältnis Ausgangsspannung zu Betriebsspannung hierdurch erhöht wird.

Mit der Schaltungsanordnung läßt sich eine Gleichspannung - die Betriebsspannung, aus der die Oszillatorspannung abgeleitet wird - auf einfache Weist in eine bezüglich dieser überhöhte weitere Gleichspannung - die Ausgangsspannung - wandeln. Die Schaltungsanordnung ist daher bestens für den Einsatz in Fahrzeugen geeignet, da deren Betriebsspannung in Abhängigkeit vom Fahrbetrieb stark variiert und somit eine Begrenzung der Ausgangsspannung für viele Anwendungen erforderlich ist.

Die Schaltungsanordnung läßt sich teilweise oder ganz in einen Schaltkreis integrieren, wobei eine Integration sehr einfach und kostengünstig ist, da zur Begrenzung der Ausgangsspannung aufgrund des hierzu erforderlichen geringen Signalstromes keine Leistungsbauelemente benötigt werden.

Die Erfindung wird im folgenden anhand der Figuren näher beschrieben. Es zeigen:
Figur 1 ein Blockschaltbild der erfindungsgemäßen Schaltungsanordnung,
Figur 2 ein Ausführungsbeispiel der Schaltungsanordnung aus Figur 1.

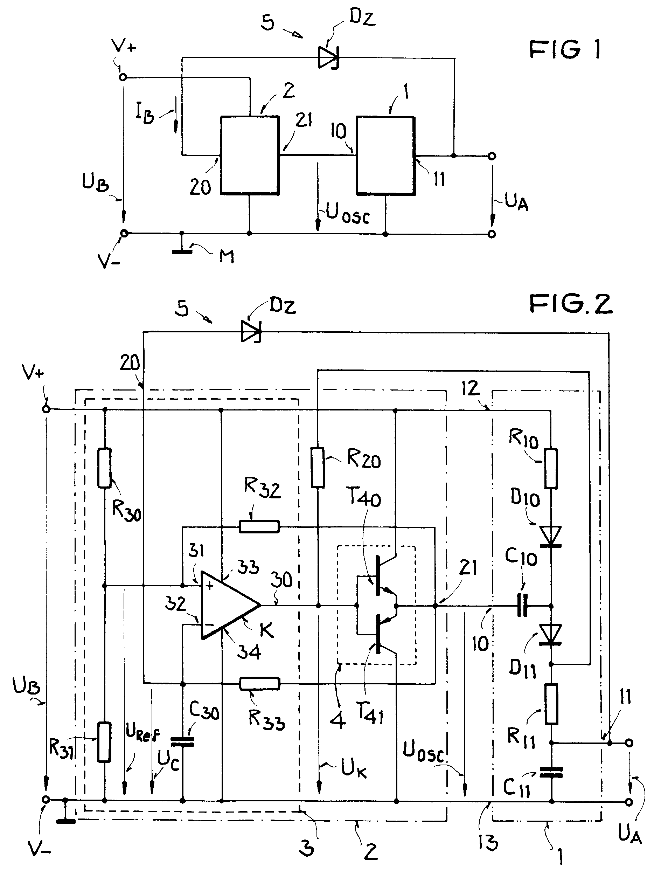

Gemäß Figur 1 ist Oszillatoranordnung 2 zur Spannungsversorgung an zwei Versorgungsanschlüsse V₊ und V₋ angeschlossen, zwischen denen eine als Betriebsspannung U_{B} bezeichnete Gleichspannung anliegt. Dabei wird dem ersten Versorgungsanschluß V₊ ein positives Potential und dem zweiten Versorgungsanschluß V₋, ein Bezugspotential, beispielsweise ein Massepotential M zugeführt. Die Oszillatoranordnung 2 kann über den Deaktivierungseingang 20 deaktiviert werden. Sie erzeugt im aktivierten Zustand aus der Betriebsspannung U_{B} die am Ozillatoranschluß 21 anstehende Oszillatorspannung U_{OSC}, deren Wertebereich, d. h. deren Spitzen-Spitzen-Wert, in etwa gleich der Betriebsspannung U_{B} ist. Die Oszillatorspannung U_{OSC} wird dem Wandlereingang 10 des Aufwärtswandlers 1 zugeführt, welcher daraus durch Spannungsüberhöhung die am Wandlerausgang 11 anstehende Ausgangsspannung U_{A} bildet. Die Ausgangsspannung U_{A} ist dabei größer als die Betriebsspannung U_{B} und demzufolge auch größer als der Wertebereich der Oszillatorspannung U_{OSC}. Sie wird dem als Zener-Diode DZ ausgebildeten Begrenzungsschalter, welcher eine Rückkopplungsschleife 5 vom Aufwärtswandler 1 zur Oszillatoranordnung 2 darstellt, zugeführt. Die Zener-Diode DZ ist dabei anodenseitig mit dem Wandlerausgang 11 und kathodenseitig mit dem Deaktivierungseingang 20 verbunden. Sie wird leitend, sobald die Ausgangsspannung U_{A} einen vorgegebenen Schwellwert überschreitet. Dem Deaktivierungseingang 20 wird dann über die Zener-Diode DZ ein geringer Signalstrom I_{B} zugeführt, durch den die Oszillatoranordnung 2 deaktiviert wird. Die Oszillatorspannung U_{OSC} kann dann nicht mehr schwingen und die Ausgangsspannung U_{A} wird somit begrenzt. Sobald die Ausgangsspannung U_{A} den Schwellwert unterschreitet, wird der Stromfluß durch die Zener-Diode DZ unterbrochen und die Oszillatoranordnung 2 wieder aktiviert. Dem Wandlereingang 10 wird dann wieder die zur Bildung der Ausgangsspannung U_{A} erforderliche Oszillatorspannung U_{OSC} zugeführt. Die Zener-Diode DZ weist, da sie lediglich den geringen Signalstrom I_{B} führen muß, geringe geometrische Abmessungen auf und ist demzufolge kostengünstig in einen Schaltkreis integrierbar.

Gemäß Figur 2 umfaßt die Oszillatoranordnung 2 die Oszillatorstufe 3 und die aus dem NPN-Transistor T₄₀ und dem PNP-Transistor T₄₁ gebildete komplementäre Emitterfolgerstufe 4. Dabei sind die Basen der Transistoren T₄₀ und T₄₁ mit dem Oszillatorausgang 30 der Oszillatorstufe 3 verbunden, die Emitter der Transistoren T₄₀ und T₄₁ mit dem an den Wandlereingang 10 angeschlossenen Ozillatoranschluß 21 der Oszillatoranordnung 2 verbunden und die Kollektoren der Transistoren T₄₀ und T₄₁ jeweils mit dem ersten bzw. zweiten Versorgungsanschluß V₊ bzw. V₋ verbunden. Der Oszillatorausgang 30 ist zudem über den Widerstand R₂₀ und den diesem nachgeschalteten Widerstand R₁₁ an den Wandlerausgang 11 angeschlossen. Die Oszillatorstufe 3 umfaßt die Komparatorstufe K, den Oszillatorkondensator C₃₀, die beiden Spannungsteilerwiderstände R₃₀ und R₃₁ sowie die beiden Rückkopplungswiderstände R₃₂ und R₃₃. Der Komparatorausgang der Komparatorstufe K bildet gleichzeitig den Oszillatorausgang 30 der Oszillatorstufe 3. Er ist als Open-Collector-Ausgang ausgebildet, d. h. er ist als Kollektor eines in der Komparatorstufe K vorgesehenen Ausgangstransistors ausgeführt, dessen Kollektorstrom durch die außerhalb der Komparatorstufe K an den Komparatorausgang 30 angeschlossenen Schaltungsteile bestimmt wird. Der nichtinvertierende Komparatoreingang 31 der Komparatorstufe K ist über den ersten Rückkopplungswiderstand R₃₂ mit dem Wandlereingang 10, über den ersten Spannungsteilerwiderstand R₃₀ mit dem ersten Versorgungsanschluß V₊ und über den zweiten Spannungsteilerwiderstand R₃₁ mit dem zweiten Versorgungsanschluß V₋ verbunden. Der invertierende Komparatoreingang 32 der Komparatorstufe K ist mit dem Deaktivierungseingang 20, über den zweiten Rückkopplungswiderstand R₃₃ mit dem Wandlereingang 10 und über den Oszillatorkondensator C₃₀ mit dem zweiten Versorgungsanschluß V₋verbunden. Der Komparatorstufe K wird zur Spannungsversorgung die Betriebsspannung U_{B} zugeführt. Sie weist hierzu einen mit dem ersten Versorgungsanschluß V₊ verbundenen ersten Spannungsversorgungsanschluß 33 und einen mit dem zweiten Versorgungsanschluß V₋ verbundenen zweiten Spannungsversorgungsanschluß 34 auf.

Der Aufwärtswandler 1 umfaßt die beiden Dioden D₁₀, D₁₁, die beiden Kondensatoren C₁₀, C₁₁ sowie die Widerstände R₁₀, R₁₁. Dabei ist der erste Spannungsversorgungsanschluß 12 des Aufwärtswandlers 1 über den Widerstand R₁₀ mit der Anode der ersten Diode D₁₀ verbunden, die Kathode der ersten Diode D₁₀ mit der Anode der zweiten Diode D₁₁ und über den ersten Kondensator C₁₀ mit dem Wandlereingang 10 verbunden, die Kathode der zweiten Diode D₁₁ über den Widerstand R₁₁ mit dem Wandlerausgang 11 verbunden und der Wandlerausgang 11 über den zweiten Kondensator C₁₁, an dem die Ausgangsspannung U_{A} abfällt, mit dem zweiten Spannungsversorgungsanschluß 13 des Aufwärtswandlers 1 verbunden. Dem Aufwärtswandler 1 wird zur Spannungsversorgung die Betriebsspannung U_{B} zugeführt. Der erste Spannungsversorgungsanschluß 12 ist hierzu mit dem ersten Versorgungsanschluß V₊ und der zweite Spannungsversorgungsanschluß 13 mit dem zweiten Versorgungsanschluß V₋ verbunden. Mit den Widerständen R₁₀, R₁₁ wird der durch die Dioden D₁₀, D₁₁ fließende Strom begrenzt; der Widerstand R₁₁ dient dabei vorwiegend zur Begrenzung desjenigen Stromes, der zu dem Zeitpunkt, in dem der NPN-Transistor T₄₀ leitend wird, zum zweiten Kondensator C₁₁ fließt. Die Werte des ersten Widerstandes R₁₀ und des ersten Kondensators C₁₀ sind derart gewählt, daß die Zeitkonstante des aus dem ersten Widerstand R₁₀ und dem ersten Kondensator C₁₀ gebildeten RC-Gliedes ist an die Frequenz der Oszillatorspannung U_{OSC} angepaßt ist.

Durch Anlegen der Betriebsspannung U_{B} an die Versorgungsanschlüsse V₊, V₋wird dem nichtinvertierenden Komparatoreingang 31 die Referenzspannung U_{Ref} und dem invertierenden Komparatoreingang 32 die Kondensatorspannung U_{C} zugeführt. Die Kondensatorspannung U_{C} ist zunächst noch kleiner als die Referenzspannung U_{Ref}, welche einen durch die Widerstände R₃₀, R₃₁, R₃₂ und durch die Betriebsspannung U_{B} festgelegten oberen Spannungswert annimmt. Die Komparatorausgangsspannung U_{K} weist daher einen der Betriebsspannung U_{B} entsprechenden High-Pegel auf. Demzufolge ist der NPN-Transistor T₄₀ leitend und der PNP-Transistor T₄₁ sperrend. Der Oszillatorkondensator C₃₀ wird daraufhin über den zweiten Rückkopplungswiderstand R₃₃ und über den NPN-Transistor T₄₀ aufgeladen. Sobald die Kondensatorspannung U_{C} die Referenzspannung U_{Ref} überschreitet, wird die Komparatorstufe K umgeschaltet und die Komparatorausgangsspannung U_{K} sinkt auf einen dem Bezugspotential entsprechenden Low-Pegel ab. Hierdurch werden die Transistoren T₄₀, T₄₁ umgeschaltet, so daß nun der PNP-Transistor T₄₁ leitend und der NPN-Transistor T₄₀ sperrend ist. Infolgedessen wird der aus den Spannungsteilerwiderständen R₃₀, R₃₁ gebildete Spannungsteiler belastet und der Oszillatorkondensator C₃₀ über den zweiten Rückkopplungswiderstand R₃₃ und den PNP-Transistor T₄₁ entladen. Die Referenzspannung U_{Ref} sinkt aufgrund der Belastung des Spannungsteilers R₃₀, R₃₁ auf einen unteren Spannungswert ab, so daß die Spannungsdifferenz zwischen der Kondensatorspannung U_{C} und der Referenzspannung U_{Ref} zunächst betragsmäßig erhöht wird und die aufgrund der Entladung des Oszillatorkondensators C₃₀ ebenfalls absinkende Kondensatorspannung U_{C} erst nach einer bestimmten Zeit die Referenzspannung U_{Ref} unterschreitet. Die Komparatorstufe K und die Transistoren T₄₀, T₄₁ werden sobald die Kondensatorspannung U_{C} die Referenzspannung U_{Ref} unterschreitet umgeschaltet, so daß die Referenzspannung U_{Ref} nun wieder den oberen Spannungswert annimmt und der Oszillatorkondensator C₃₀ wieder über Rückkopplungswiderstand R₃₂ und den NPN-Transistor T₄₀ aufgeladen wird. Diese Lade- und Entladevorgänge, bei denen die Oszillatorspannung U_{OSC} innerhalb eines zwischen dem oberen und unteren Spannungswert der Referenzspannung U_{Ref} liegenden Wertebereichs variiert wird, wiederholen sich periodisch. Daher erhält man als oszillatorspannung U_{OSC} ein periodisches Signal, dessen Frequenz im wesentlichen durch den oszillatorkondensator C₃₀ und den zweiten Rückkopplungswiderstand R₃₃ bestimmt wird und dessen Tastverhältnis im wesentlichen durch die Spannungsteilerwiderstände R₃₀, R₃₁ und den ersten Rückkopplungswiderstand R₃₂ bestimmt wird. Die Spannungswerte der Oszillatorspannung U_{OSC} variieren dabei zwischen einem Low-Pegel, der in etwa gleich dem Bezugspotential ist, und einem High-Pegel, der in etwa gleich der Betriebsspannung U_{B} ist.

Unmittelbar nach dem Anlegen der Betriebsspannung U_{B} an die Versorgungsanschlüsse V₊, V₋ fließt ein Ladestrom über die Widerstände R₁₀, R₁₁ und die Dioden D_{10,} D₁₁ in den zweiten Kondensator C₁₁. Die Ausgangsspannung U_{A} steigt dabei an und erreicht nach spätestens einigen Taktzyklen der Oszillatorspannung U_{OSC} einen Spannungswert, der um zwei Diodendurchflußspannungen, das sind die an den Dioden D₁₀, D₁₁ abfallenden Spannungen, kleiner als die Betriebsspannung U_{B} ist. Daraufhin wird bei den Low-Pegeln der Oszillatorspannung U_{OSC} der erste Kondensator C₁₀ über den ersten Widerstand R₁₀ und die erste Diode D₁₀ aus der Betriebsspannung U_{B} aufgeladen und bei den High-Pegeln der Oszillatorspannung U_{OSC} der zweite Kondensator C₁₁ über den zweiten Widerstand R₁₁ und die zweite Diode D₁₁ aus dem ersten Kondensator C₁₀ aufgeladen. Die auf diese Art dem zweiten Kondensator C₁₁ zugeführten Ladungen bewirken einen Anstieg der Ausgangsspannung U_{A} auf Spannungswerte, die größer als die Betriebsspannung U_{B} sind. Der Aufwärtswandler 1 wirkt demnach als Ladungspumpe, mit der zur Erzeugung der Ausgangsspannung U_{A} Ladungen nach Maßgabe der Oszillatorspannung U_{OSC} in den zweiten Kondensator C₁₁ gepumpt werden. Die erste Diode D₁₀ verhindert dabei, daß Ladungen aus dem ersten Kondensator C₁₀ zum Spannungsversorgungsanschluß 12 abfließen und die zweite Diode D₁₁ verhindert, daß Ladungen aus dem zweiten Kondensator C₁₁ zum ersten Kondensator C₁₀ und zum Spannungsversorgungsanschluß 12 abfließen.

Die Zener-Diode DZ wird, sobald die Ausgangsspannung U_{A} den Schwellwert - den maximal zulässigen Wert der Ausgangsspannung U_{A} - überschreitet, leitend und die Kondensatorspannung U_{C} wird somit auf einen über dem unteren Spannungswert der Referenzspannung U_{Ref} liegenden Wert angehoben. Solange die Kondensatorspannung U_{C} größer als der untere spannungswert der Referenzspannung U_{Ref} ist, kann die Komparatorausgangsspannung U_{K} und demnach auch die Oszillatorspannung U_{OSC} nicht vom Low-Pegel auf High-Pegel wechseln, d. h. die Oszillatoranordnung 2 ist deaktiviert. Sie wird erst dann wieder aktiviert, wenn die Kondensatorspannung U_{C} unter den unteren Spannungswert der Referenzspannung U_{Ref} absinkt. Das ist dann der Fall, wenn die Ausgangsspannung U_{A} auf einen unter dem Schwellwert liegenden Spannungswert absinkt.

Da die Ausgangsspannung U_{A} größer als die Betriebsspannung U_{B} ist und der Komparatorausgang 30 über die Widerstände R₂₀ und R₁₁ mit dem Wandlerausgang 11 verbunden ist, erhält man am Komparatorausgang 30 einen großen Signalhub, d. h. eine große Spannungsdifferenz zwischen dem High- und Low-Pegel der Komparatorausgangsspannung U_{K}. Daher wird der NPN-Transistor T₄₀ bei einem High-Pegel der Komparatorausgangsspannung U_{K} stark übersteuert und folglich gesättigt. Der Spannungsabfall zwischen dem Kollektor und Emitter des NPN-Transistors T₄₀ ist dann sehr gering, d. h. die Oszillatoranordnung 2 weist nur geringe Spannungsverluste auf, so daß der High-Pegel der Oszillatorspannung U_{OSC} fast gleich der Betriebsspannung U_{B} ist.

## Patentansprüche

1. Schaltungsanordnung zur Spannungsüberhöhung, mit einem einen Wandlereingang (10) und einen Wandlerausgang (11) aufweisenden Aufwärtswandler (1), wobei am Wandlereingang (10) eine Oszillatorspannung (U_{OSC}) anliegt und am Wandlerausgang (11) eine gleichgerichtete, bezüglich der Oszillatorspannung (U_{OSC}) überhöhte Ausgangsspannung (U_{A}) ansteht, dadurch gekennzeichnet, daß eine einen Deaktivierungseingang (20) aufweisende deaktivierbare Oszillatoranordnung (2) zur Erzeugung der Oszillatorspannung (U_{OSC}) vorgesehen ist und daß eine Rückkopplungsschleife (5) zur Begrenzung der Ausgangsspannung (U_{A}) vorgesehen ist, über die der Wandlerausgang (11) mit dem Deaktivierungseingang (20) verbunden ist und über die die Oszillatoranordnung (2) bei einen Schwellwert überschreitenden Spannungswerten der Ausgangsspannung (U_{A}) deaktivierbar ist.

2. Schaltungsanordnung nach Anspruch 1, dadurch gekennzeichnet, daß die Rückkopplungsschleife (5) einen Begrenzungsschalter (DZ) aufweist, über den der Wandlerausgang (11) mit dem Deaktivierungseingang (20) der Oszillatoranordnung (2) verbunden ist, wobei der Begrenzungsschalter (DZ) bei den Schwellwert überschreitenden Spannungswerten der Ausgangsspannung (U_{A}) geschlossen ist.

3. Schaltungsanordnung nach Anspruch 2, dadurch gekennzeichnet, daß der Begrenzungsschalter (DZ) als Zener-Diode ausgebildet ist.

4. Schaltungsanordnung nach einem der vorherigen Ansprüche, dadurch gekennzeichnet, daß die Oszillatoranordnung (2) eine Oszillatorstufe (3) mit einem über eine komplementäre Emitterfolgerstufe (4) mit dem Wandlereingang (10) des Aufwärtswandlers (1) verbundenen Oszillatorausgang (30) aufweist, wobei die komplementäre Emitterfolgerstufe (4) zur Spannungsversorgung mit zwei Versorgungsanschlüssen (V₊, V₋), zwischen denen eine Betriebsspannung (U_{B}) anliegt, verbunden ist.

5. Schaltungsanordnung nach einem der vorherigen Ansprüche, dadurch gekennzeichnet, daß der Oszillatorausgang (30) der Oszillatorstufe (3) mit dem Wandlerausgang (11) des Aufwärtswandlers (1) verbunden ist.

6. Schaltungsanordnung nach Anspruch 5, dadurch gekennzeichnet, daß der Oszillatorausgang (30) der Oszillatorstufe (3) über mindestens einen Widerstand (R₂₀, R₁₁) mit dem Wandlerausgang (11) des Aufwärtswandlers (1) verbunden ist.

7. Schaltungsanordnung nach einem der Ansprüche 4 bis 6, dadurch gekennzeichnet, daß der Oszillatorausgang (30) der Oszillatorstufe (3) als Open-Collector-Ausgang ausgebildet ist.

8. Schaltungsanordnung nach einem der Ansprüche 4 bis 7, dadurch gekennzeichnet, daß die Oszillatorstufe (3) einen Oszillatorkondensator (C₃₀), zwei Rückkopplungswiderstände (R₃₂, R₃₃), zwei Spannungsteilerwiderstände (R₃₀, R₃₁) und eine Komparatorstufe (K) mit zwei über jeweils einen der Rückkopplungswiderstände (R₃₂, R₃₃) an den Wandlereingang (11) des Aufwärtswandlers (1) angeschlossenen Komparatoreingängen (31, 32) und mit einem als Oszillatorausgang (30) der Oszillatorstufe (3) ausgeführten Komparatorausgang (30) aufweist, wobei der eine Komparatoreingang (32) über den Oszillatorkondensator (C₃₀) mit einem der Versorgungsanschlüsse (V₋) verbunden ist und der andere Komparatoreingang (31) über die Spannungsteilerwiderstände (R₃₀, R₃₁) mit jeweils einem der Versorgungsanschlüsse (V₊) verbunden ist.

9. Schaltungsanordnung nach Anspruch 8, dadurch gekennzeichnet, daß der Deaktivierungseingang (20) an den mit dem Oszillatorkondensator (C₃₀) verbundenen Komparatoreingang (32) der Komparatorstufe (K) angeschlossen ist.

10. Schaltungsanordnung nach einem der vorherigen Ansprüche, dadurch gekennzeichnet, daß der Aufwärtswandler (1) eine erste und eine zweite Diode (D₁₀, D₁₁), einen ersten und einen zweiten Kondensator (C₁₀, C₁₁) sowie einen ersten und einen zweiten Spannungsversorgungsanschluß (12, 13) aufweist, wobei der erste Spannungsversorgungsanschluß (12) mit der Anode der ersten Diode (D₁₀) verbunden ist, die Kathode der ersten Diode (D₁₀) mit der Anode der zweiten Diode (D₁₁) und über den ersten Kondensator (C₁₀) mit dem Wandlereingang (10) verbunden ist, die Kathode der zweiten Diode (D₁₁) mit dem Wandlerausgang (11) und über den zweiten Kondensator (C₁₁) mit dem zweiten Spannungsversorgungsanschluß (13) verbunden ist.
